# FASCICULE DE BREVET EUROPEEN

(11) **EP 1 387 538 B1**
(45) Date de publication et mention de la délivrance du brevet: **21.03.2007**
(21) Numéro de dépôt: 03291744.5
(22) Date de dépôt: 15.07.2003
(51) Int. Cl.: H04L 12/56

(54) **Dispositif et procédé de détermination de chemins de routage dans un réseau de communications, en présence d'attributs de sélection**
Vorrichtung und Verfahren zur Bestimmung der Weglenkung in einem Kommunikationsnetzwerk, mit Auswahl von Attributen
Apparatus and method for determining routing paths in a communication network with selection attributes

(30) Priorité: 30.07.2002 FR 0209660
(43) Date de publication de la demande: 04.02.2004
(73) Titulaire: ALCATEL, 75008 Paris (FR)
(72) Inventeur: Randriamasy, Claire-Sabine, 92190 Meudon (FR); Rui Figueira, José, 7630 Colos (Odemira) (PT); Gandibleux, Xavier, 1410 Waterloo (BE); Thomin, Philippe, 59192 Beuvrages (FR)
(74) Mandataire: Chaffraix, Sylvain

(56) Documents cités:
- EP-A- 0 568 477
- VAN MIEGHEM P ET AL: "Hop-by-hop quality of service routing" COMPUTER NETWORKS, ELSEVIER SCIENCE PUBLISHERS B.V., AMSTERDAM, NL, vol. 37, no. 3-4, 5 novembre 2001 (2001-11-05), pages 407-423, XP004309781 ISSN: 1389-1286

## Description

L'invention concerne le domaine des communications entre terminaux au sein d'un réseau, et plus particulièrement celui de la détermination des chemins (ou trajets) de routage de données entre des terminaux source et destinataire(s).

En raison de la croissance exponentielle du trafic au sein des réseaux de communications publics, tels qu'lnternet, les opérateurs des réseaux sont de plus en plus souvent confrontés à des problèmes de congestion de réseau. Cela résulte, notamment, des méthodes employées pour déterminer les chemins de routage des données parmi les noeuds des réseaux. En effet, les méthodes de routage traditionnelles n'étant pas contraintes et, pour la plupart d'entre elles, reposant sur la détermination du chemin le plus court entre les terminaux source et destinataire(s), la plus grande partie du trafic est dirigée suivant un même chemin, qui se trouve de ce fait congestionné, alors même que de nombreux autres chemins, qui pourraient s'avérer mieux adaptés compte tenu d'autres critères que la longueur, restent sous-utilisés.

De plus, la longueur du chemin de routage n'est pas nécessairement le critère le plus important. D'autres critères peuvent s'avérer beaucoup plus pertinents dans certaines applications, comme par exemple la bande passante requise.

Pour tenter de remédier à cet inconvénient, plusieurs solutions ont été envisagées. Il a ainsi été proposé de déterminer les chemins de routage à l'aide de combinaisons linéaires de critères additifs. Mais, d'une part, l'agrégation de composantes hétérogènes à l'aide de combinaisons linéaires n'a pas réellement de signification, et d'autre part, cela fournit un jeu de chemins qui ne contient pas obligatoirement le meilleur.

Deux autres solutions ont été plus récemment proposées pour tenter d'améliorer la situation soit pour le routage standard (ou « best effort routing »), caractérisé par la prise en compte de critères en l'absence de contraintes, soit pour le routage intégrant la qualité de service (ou QoS routing pour « Quality of Service routing»), caractérisé par la prise en compte de critères en présence de contraintes.

Une première solution concerne le routage multi-critères de type best effort. Elle consiste à calculer des chemins de façon séquentielle en utilisant des critères additifs, puis à les comparer en utilisant des critères de type additif et non additif. Du fait du traitement séquentiel, cette solution requiert beaucoup de temps de calcul. De plus, cette solution impose que l'on choisisse un chemin parmi un jeu qui ne contient pas forcément le meilleur chemin.

Une seconde solution concerne le routage multi-critères de type QoS. Cette solution, connue sous l'acronyme anglais TAMCRA (pour «Tunable Accuracy Multiple Constraints Routing Algorithm »), consiste à sélectionner au niveau de chaque noeud intermédiaire du réseau les k plus petits chemins parmi un jeu de chemins dits « non dominés ». Les critères utilisés dans le calcul sont tous de type additif, et sont chacun contraints par une limite supérieure. Les critères de type non additif, tels que la bande passante, sont introduits sous forme de contraintes avant le début du calcul, dans le but de supprimer les liens inter-noeuds qui ne satisfont pas à l'une au moins desdites contraintes. Cette solution est notamment décrite dans le document de H. De Neve et P. Van Mieghem, « A Tunable Accuracy Multiple Constraints Routing Algorithm », Computer Communication, Vol. 23, pages 667-670, 2000.

Une version améliorée de l'algorithme, appelée SAMCRA (Self-Adaptive Multiple Constraints Routing Algorithm), a été présentée dans l'article « Hop-by-hop quality of service routing » de Piet Van Mieghem, Hans De Neve et Fernando Kuipers, paru dans la revue « Computer Nefworks », vol. 37, 2001.

Comme pour la première solution, cette seconde solution (tant TAMCRA que sa version améliorée SAMCRA) peut ne pas fournir le meilleur chemin étant donné qu'elle ne prend pas en compte tous les chemins intermédiaires. De plus, cette solution ne peut s'appliquer qu'au routage de type QoS étant donné que la détermination des chemins repose sur une comparaison à des seuils, formant contraintes, appliqués à des critères.

Aucune solution connue n'apporte donc une entière satisfaction, notamment pour ce qui concerne la prise en compte du critère de bande passante pendant la phase de détermination des chemins de routage et/ou l'aptitude à être utilisée aussi bien pour le routage de type best effort que pour le routage de type QoS.

L'invention a donc pour but de remédier à tout ou partie des inconvénients précités.

Elle propose à cet effet un procédé de détermination de chemin(s) de routage de données dans un réseau de communications, comportant une multiplicité de noeuds, comprenant les étapes suivantes :
a) s'assurer de la connexité d'une partie au moins de la multiplicité de noeuds,
b) parmi les noeuds de cette partie, calculer des chemins possibles entre un noeud de départ et un noeud d'arrivée, compte tenu d'au moins deux critères choisis, puis déduire une solution idéale à partir de performances des chemins possibles sur les critères,
c) attribuer à chaque chemin possible une valeur d'intérêt compte tenu de la solution idéale, puis classer les chemins possibles compte tenu de leurs valeurs d'intérêt respectives, et
d) sélectionner parmi les chemins possibles classés les k chemins les mieux classés, de manière à router des données via l'un de ces k chemins.

Par définition, deux noeuds sont dits « connexes » s'ils peuvent s'échanger des données directement ou indirectement par l'intermédiaire d'un ou plusieurs autres noeuds. Autrement dit, si l'on considère un graphe de noeuds, ce graphe est dit connexe si chaque couple de noeuds peut être relié par un chemin.

Le procédé selon l'invention, qui peut servir, dans le mode de base présenté ci-dessus, au routage de type best effort, peut également servir au routage de type QoS. Pour ce faire, on peut, au début de l'étape a), commencer par déterminer parmi la multiplicité de noeuds tous les couples de noeuds qui peuvent établir entre-eux une liaison orientée supportant toutes les contraintes locales choisies, puis s'assurer de la connexité de l'ensemble des noeuds de ces couples. En variante ou en complément, on peut, à la fin de l'étape b), retenir parmi les chemins possibles ceux qui satisfont à toutes les contraintes globales choisies, de sorte qu'à l'étape c) on attribue des valeurs d'intérêt aux chemins possibles retenus.

On entend ici par « contrainte locale » une contrainte appliquée sur des liens (ou liaisons) orientés, tels que des arcs. Par ailleurs, on entend ici par « contrainte globale » une contrainte appliquée sur un chemin, comme par exemple le nombre de sauts du chemin ou la durée maximale du chemin.

Dans le cas du routage de type best effort, il est préférable de s'assurer de la connexité de l'ensemble des noeuds de la multiplicité, étant donné que ces noeuds ne font pas l'objet d'une sélection préalable, par exemple à l'aide de contraintes locales.

Préférentiellement, au moins l'un des critères utilisés est de type non additif. Dans ce cas, il est avantageux d'intégrer, lors de l'étape b), une trace mémorisant un parcours correspondant à un chemin partiel, de manière à détecter et prévenir l'apparition de cycles (ou boucles) dans les chemins en cours de construction. Et, il est encore plus avantageux de conserver certaines solutions, dites « faiblement non dominées » sur le critère non additif, lors de la procédure d'élimination des chemins partiels.

Le procédé selon l'invention pourra comporter de nombreuses caractéristiques complémentaires qui pourront être prises séparément et/ou en combinaison, et en particulier :
- la connexité (qui est une contrainte) est préférentiellement vérifiée par un mécanisme de propagation du noeud de départ vers tous les autres noeuds de la multiplicité de noeuds, afin que chaque noeud soit visité. Pour ce faire, on peut, par exemple, utiliser l'algorithme de Tarjan ;
- on peut déterminer à l'étape b), pour chaque chemin, des valeurs représentatives de sa « performance » par rapport à chacun des critères choisis, puis qualifier de chemin possible chaque chemin dont les valeurs de performance sont « non dominées ». Dans ce cas, on peut déterminer, toujours à l'étape b) et pour chaque critère, la meilleure valeur de performance observée sur les chemins possibles, dite « valeur optimale », puis construire la solution idéale sous la forme d'un multiplet de composantes constituées des différentes valeurs optimales déterminées. En fait, les liaisons sur lesquelles les valeurs optimales sont observées constituent rarement une séquence connexe. Autrement dit, un chemin idéal correspondant à une solution idéale n'existe qu'exceptionnellement ;
- à l'étape c) la valeur d'intérêt attribuée à chaque chemin possible caractérise préférentiellement la plus grande valeur des composantes, associées aux différents critères choisis, d'une fonction de Tchebychev pondérée, fonction des différences entre la valeur de performance du chemin concerné et la composante correspondante de la solution idéale. Dans ce cas, les k chemins possibles retenus présentent les k plus petites valeurs d'intérêt.

L'invention porte également sur un dispositif de détermination de chemin(s) de routage de données dans un réseau de communications comportant une multiplicité de noeuds. Ce dispositif se caractérise par le fait qu'il comporte des moyens de traitement capables de :
a) s'assurer de la connexité d'une partie au moins de la multiplicité de noeuds,
b) parmi les noeuds de cette partie, calculer des chemins possibles entre un noeud de départ et un noeud d'arrivée, compte tenu d'au moins deux critères choisis, puis déduire une solution idéale à partir de performances des chemins possibles sur lesdits critères,
c) attribuer à chaque chemin possible une valeur d'intérêt compte tenu de la solution idéale, puis classer les chemins possibles compte tenu de leurs valeurs d'intérêt respectives, et
d) sélectionner parmi les chemins possibles classés les k chemins les mieux classés, de manière à router des données via l'un de ces k chemins.

Le dispositif selon l'invention, qui peut servir, dans le mode de base présenté ci-dessus, au routage de type best effort, peut également servir au routage de type QoS. Pour ce faire, les moyens de traitement peuvent être agencés de manière à commencer par déterminer parmi la multiplicité de noeuds tous les couples de noeuds qui peuvent établir entre-eux une liaison orientée supportant toutes les contraintes locales choisies, puis à s'assurer de la connexité de l'ensemble des noeuds de ces couples. En variante ou en complément, les moyens de traitement peuvent être agencés de manière à ne retenir parmi les chemins possibles que ceux qui satisfont à toutes les contraintes globales choisies, afin de n'attribuer des valeurs d'intérêt qu'aux chemins possibles retenus.

Lorsque l'un au moins des critères utilisés est de type non additif, il est avantageux que les moyens de traitement soient agencés de manière à intégrer dans le calcul des chemins possibles une trace mémorisant un parcours correspondant à un chemin partiel, de manière à détecter et prévenir l'apparition de cycles dans les chemins en cours de construction. Et, il est encore plus avantageux que les moyens de traitement soient capables de conserver certaines solutions, dites « faiblement non dominées » sur le critère non additif, lors de la procédure d'élimination des chemins partiels.

Les moyens de traitement du dispositif selon l'invention pourront comporter de nombreuses caractéristiques complémentaires qui pourront être prises séparément et/ou en combinaison, et en particulier ils pourront :
- s'assurer de la connexité à partir d'un mécanisme de propagation du noeud de départ vers tous les autres noeuds de la multiplicité de noeuds, afin que chaque noeud soit visité (ou testé) ;
- lors du calcul des chemins possibles, déterminer pour chaque chemin, des valeurs représentatives de sa « performance » par rapport à chacun des critères choisis, puis attribuer la qualité de chemin possible à chaque chemin dont les valeurs de performance sont « non dominées ». Dans ce cas, les moyens de traitement peuvent être agencés de manière à déterminer pour chaque critère la meilleure valeur de performance observée sur les chemins possibles, dite « valeur optimale », puis construire la solution idéale sous la forme d'un multiplet de composantes constituées des différentes valeurs optimales déterminées ;
- attribuer à chaque chemin possible une valeur d'intérêt qui caractérise préférentiellement la plus grande valeur des composantes, associées aux différents critères choisis, d'une fonction de Tchebychev pondérée, fonction des différences entre la valeur de performance du chemin concerné et la composante correspondante de la solution idéale. Dans ce cas, les k chemins possibles retenus présentent les k plus petites valeurs d'intérêt.

Qu'il s'agisse du procédé ou du dispositif selon l'invention, il est préférable que :
- les éventuelles contraintes locales et/ou globales soient choisies dans un groupe comprenant au moins la bande passante minimale requise, la longueur maximale du chemin, la durée maximale du chemin, au moins une liaison interdite, le nombre de sauts du chemin et une restriction de couleur de chemin ;
- les critères soient choisis dans un groupe comprenant au moins la bande passante disponible, le nombre de sauts du chemin et la durée du chemin. Dans ce cas, il est encore plus préférable que les deux critères choisis soient la bande passante disponible et la durée du chemin. Pendant l'étape b) (ou à l'aide des moyens de traitement), on peut alors avantageusement, impacter (ou pondérer) le critère portant sur la durée du chemin par une pénalité portant, par exemple, sur le coût d'administration du chemin ;
- les critères soient choisis en fonction du type de service requis ;
- les critères choisis soient pondérés en fonction de leur importance compte tenu d'informations de gestion ;
- les éventuelles contraintes et leurs valeurs associées soient choisies en fonction de la qualité de service requise.

Par ailleurs, l'invention peut notamment être mise en oeuvre dans les réseaux de communications lP.

D'autres caractéristiques et avantages de l'invention apparaîtront à l'examen de la description détaillée ci-après, et des dessins annexés, sur lesquels :
- la figure 1 illustre de façon schématique une partie d'un réseau de communications comportant une multiplicité de noeuds équipés d'un dispositif de calcul de chemins de routage selon l'invention, et
- la figure 2 est un graphe illustrant de façon schématique le mode de détermination de solutions dites « non dominées ».

Les dessins annexés sont, pour l'essentiel, de caractère certain. En conséquence, ils pourront non seulement servir à compléter l'invention, mais aussi contribuer à sa définition, le cas échéant.

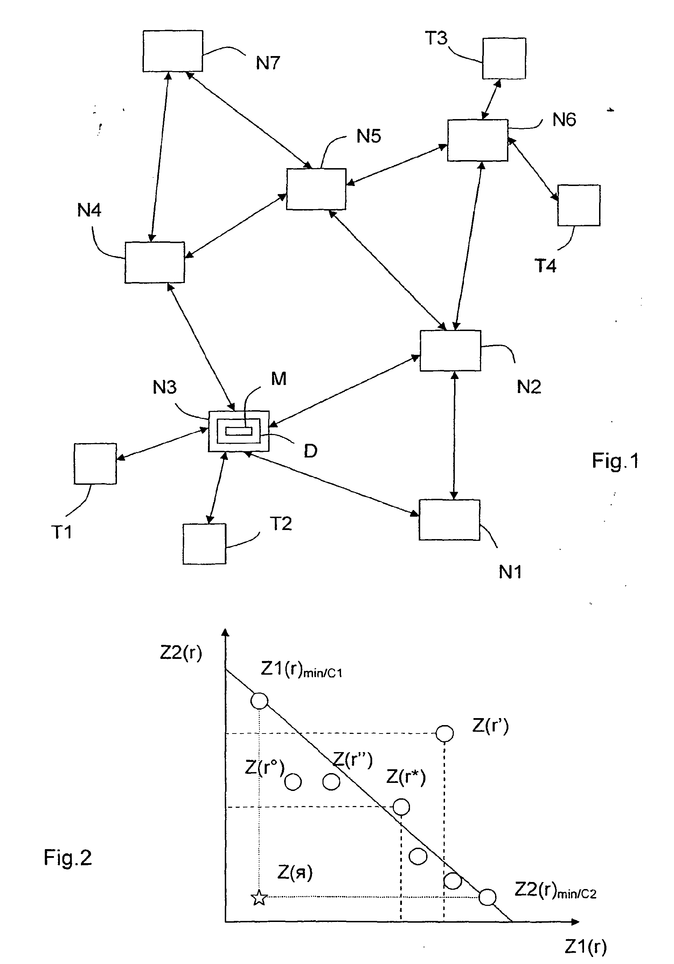

Comme cela est illustré sur la figure 1, un réseau de communications IP comporte généralement une multiplicité de terminaux de commutation ou routage Nn (ici n = 1 à 7), également appelés noeuds, à certains desquels sont connectés des terminaux d'utilisateurs ou d'entreprises Tm (ici m = 1 à 4). Lorsqu'un terminal d'utilisateur ou d'entreprise Tm, dit terminal source, souhaite transmettre des données à un ou plusieurs autres terminaux d'utilisateurs ou d'entreprises, dits terminaux destinataires, il récupère la ou les adresses IP du ou des terminaux destinataires, puis le noeud Nn auquel il est connecté détermine à l'aide d'un module de calcul de chemins et selon le protocole de routage distribué du réseau, comme par exemple OSPF (pour « Open Shortest Path First »), le chemin (ou trajet) qui doit permettre d'acheminer au mieux les données du terminal source vers les terminaux destinataires. Chaque noeud d'un réseau IP comporte un module de calcul de chemins qui détermine le prochain noeud adjacent (« next hop ») auquel il doit transmettre les paquets de données qui sont ainsi acheminés pas à pas.

On entend ici par «chemin» une suite ordonnée de noeuds ou de liaisons (entre deux noeuds i et j). Bien entendu, un chemin peut être modifié en cours de transfert de données, par exemple pour tenir compte d'un problème matériel. Par conséquent, tous les noeuds Nn d'un réseau sont généralement aptes à calculer un chemin de routage conformément au protocole de routage distribué du réseau.

Dans ce qui suit, on considère que le réseau de communications est un réseau lP.

Le dispositif de l'invention est un module de calcul de chemins de routage. Il est donc destiné à être installé dans chaque noeud Nn d'un réseau de communications, de manière à calculer le chemin le mieux adapté à la transmission de données entre un terminal source et un terminal destinataire (ou plusieurs). Il peut, par ailleurs, être couplé à un protocole de routage, tel que le protocole de routage d'état de liaison OSPF, dès lors que ledit protocole supporte une gestion de trafic de type TE-LSA (pour «Trafic Engineering - Link State Advertisement »).

Le dispositif D selon l'invention est destiné au calcul de chemins de routage multi-critères avec ou sans contraintes. Il est donc adapté au routage de type best effort comme au routage de type QoS.

Le dispositif D comporte un module de traitement M, qui peut être réalisé sous la forme de circuits électroniques, de modules logiciels (ou informatiques), ou d'une combinaison de circuits et de logiciels. Ce module de traitement M peut accéder aux informations sur l'état d'utilisation du réseau, via les TE-LSAs, ainsi qu'à la topologie du réseau, et par conséquent à la liste de ses noeuds Nn, qui est généralement stockée dans une mémoire du noeud dans lequel il est implanté, régulièrement mise à jour.

Dans ce qui suit, on va décrire un mode de réalisation du dispositif selon l'invention, adapté au routage de type QoS, qui se caractérise par la prise en compte de critères en présence de contraintes locales et/ou globales. Mais, comme mentionné précédemment, le dispositif est également adapté au routage de base, de type best effort, qui se caractérise par la prise en compte de critères en l'absence de contraintes.

Lorsque le module de traitement M reçoit une demande de calcul de chemin, il commence tout d'abord par se procurer la topologie et l'état d'utilisation du réseau, de manière à déterminer tous les couples de noeuds qui peuvent établir entre-eux une liaison (ou un lien, défini par un couple (i,j) désignant deux noeuds) supportant chaque contrainte locale choisie.

On entend ici par « contrainte locale » toute contrainte applicable à une liaison orientée d'un réseau, telle qu'un arc, et notamment la bande passante minimale requise, la longueur maximale d'une liaison, la durée maximale d'une liaison, une ou plusieurs liaisons interdites.

Dans le cas d'un routage de type best effort, ce début de traitement est bien entendu omis puisque l'on n'utilise pas de contraintes.

Préférentiellement, cette détermination de couples de noeuds s'effectue à partir de l'établissement d'un graphe de filtrage G(X,U), où X représente le jeu de noeuds Nn du réseau et U le jeu de liens (ou liaisons) directionnels (i,j). Toutes les liaisons du graphe G(X,U) qui violent au moins l'une des contraintes locales choisies sont éliminées dudit graphe, ce qui produit un graphe « filtré ».

Le module de traitement M s'assure ensuite que le graphe G(X,U) filtré est connexe (au sens mathématique du terme). Il utilise pour ce faire, préférentiellement, une technique de propagation d'information du noeud source Ns vers l'ensemble des noeuds Nn du graphe filtré, de sorte que tous les noeuds soient vérifiés (ou testés). Cette vérification de la connexité du graphe peut être réalisée, par exemple, avec l'algorithme de Tarjan.

Dans le cas d'un routage de type best effort, la vérification de la connexité sur une partie au moins des noeuds du graphe, mais de préférence sur tous les noeuds du graphe, constitue le début du traitement.

En l'absence de connexité du graphe filtré (ou non, dans le cas du best effort), le reste du traitement ne peut pas être effectué.

Si le graphe filtré (ou non) est connexe, le module de traitement M calcule parmi les noeuds des couples (ou liaisons (i,j)) retenus tous les chemins possibles (ou « efficient paths ») r* entre un noeud de départ, par exemple N3, auquel est connecté le terminal source, par exemple T1, et un noeud d'arrivée, par exemple N6, auquel est connecté le terminal destinataire, par exemple T3, en prenant en compte au moins deux critères choisis.

On entend ici par « chemin possible» un chemin dit «efficace» ou « Pareto-optimal » dont les valeurs de performances, sur lesquelles on reviendra plus loin, sont « non dominées ». Par ailleurs, on entend ici par « critère » tout type de critère (ou métrique) pouvant être pris en compte dans un réseau, qu'il soit de type additif, comme par exemple la durée du chemin C1 ou le nombre de sauts du chemin C3, ou de type non additif, comme par exemple la bande passante disponible C2 (qui est de surcroît de type « minimum-maximum »). C1 et C2 sont des critères dits de haut niveau, tandis que C3 est un critère dit de bas niveau Par conséquent, les critères C1 et C2 sont, préférentiellement, toujours pris en compte, tandis que le critère C3 est optionnel.

Par ailleurs, il peut être intéressant d'impacter (ou pondérer) le critère C1 (durée du chemin) par une pénalité portant, par exemple, sur le coût d'administration du chemin CA. Cela permet de réduire les vecteurs de calcul, sur lesquels on reviendra plus loin, d'une dimension, et par conséquent de limiter le temps de calcul et la mémoire nécessaire audit calcul.

Préférentiellement, un chemin possible r* est calculé comme indiqué ci-après. Tout d'abord, un chemin est désigné par une variable r(s,t), où s désigne le noeud source et t le noeud destinataire, ainsi que par un vecteur de performance Z(r) défini par un multiplet de composantes (Z1(r), Z2(r),..., Zp(r)) associées chacune à l'un des p critères utilisés. Par exemple, la composante Z1(r) représente la performance du chemin r par rapport au critère C1 et la composante Z2(r) représente la performance du chemin r par rapport au critère C2.

Pour un critère de type additif, tel que C1, la composante Z1(r) de la performance Z(r) est définie par la relation Z1(r) = Σ_{(*i,j*)∈}*ᵣC*1(*i,j*).

Lorsque le critère C1 est impacté (ou pondéré) par la pénalité CA, la relation précédente s'écrit Z1(r) = Σ_{(*i,j*)∈}*ᵣC*1(*i,j*)**CA*(*i,j*).

Pour un critère de type non additif, tel que C2, la composante Z2(r) de la performance Z(r) est définie par la relation Z2(r) = *MIN*_{(*i,j*)}*_{∈r}C*2(*i,j*) *.*

Ici, Cp(i,j) désigne la valeur du critère Cp pour un arc (i,j).

Compte tenu de ces définitions, un chemin est qualifié de chemin possible r*(s,t), c'est à dire « efficace », si il n'existe pas de chemin envisageable entre les noeuds s et t vérifiant la relation : Zp(r) ≤ Zp(r*), ∀ p = 1 à P (où P est le nombre total de critères utilisés), et Zp'(r) < Zp'(r*) pour l'une quelconque de ces composantes p appartenant à l'ensemble {1,...,P}.

Le vecteur de performance Z(r*) du chemin r* est alors appelé solution « non dominée » (ou NDS pour « Non-Dominated Solution ») lorsque tout autre chemin r' possède un vecteur de performance Z(r') dont l'une au moins des composantes Zp(r') est « moins bonne» (ou « moins performante») que la composante correspondante Zp(r*) du chemin r*. Un tel chemin r*, associé à un vecteur de performance non dominé, est alors appelé chemin possible (ou « efficient path ») ou « Pareto-optimal ».

Un exemple de détermination de solution non dominée (ou NDS) est illustré sur la figure 2, dans le cas de deux critères C1 et C2, de type commensurable, c'est-à-dire dont les dimensions métriques peuvent faire l'objet d'addition(s) et de multiplication(s). Cela s'applique également aux grandeurs incommensurables, telles que la bande passante C2. Cela s'applique également à des ensembles de grandeurs incommensurables entre-elles telles que la durée du chemin C1 et la bande passante C2.

Dans cet exemple, Z(r*) est une solution non dominée (ou NDS), puisqu'il n'existe pas d'autre point dont toutes les coordonnées sont strictement inférieures à celles de Z(r*). Chaque autre point Z(r) possède au moins une composante qui est moins bonne que la composante correspondante de Z(r*). En d'autres termes, le cône, matérialisé par des tirets et placé en-dessous et à gauche de Z(r*), est vide. Dans cet exemple, Z(r') est dominé par quatre points, dont Z(r*), qui se trouvent placés dans le cône matérialisé par des tirets placé en-dessous de lui, mais pas par les points extrêmes Z1(r)_{min/C1}, associé à C1, et Z2(r)_{min/C2,} associé à C2, qui sont donc également non dominés. Seule Z(r') est ici une solution dominée. Par ailleurs, Z(r") est une solution dite « faiblement non dominée » par Z(r°) car l'une au moins des composantes de Z(r°) est égale (et non strictement inférieure) à son homologue dans Z(r").

Afin de calculer les différents chemins possibles r* obtenus par la méthode présentée ci-avant, on peut utiliser une adaptation d'un algorithme d'attribution de label, du type de celui décrit dans le document de E. Martins, « On a multi-criteria shortest path problem », European Journal Of Operational Research, Vol. 16, pages 236-245, 1984.

L'adaptation consiste, notamment, à intégrer aux critères additifs traités par l'algorithme de Martins un critère de type non additif, comme par exemple un critère de type « minimum-maximum ». L'intégration d'un tel critère impose des aménagements de l'algorithme, comme par exemple ceux mentionnés ci-dessous.

Un premier aménagement peut consister à intégrer à l'algorithme de calcul de chemins (correspondant à l'étape b) du procédé) une trace mémorisant le parcours correspondant à un chemin partiel, afin de détecter et prévenir l'apparition, dans les chemins en cours de construction, de cycles (ou boucles) lors de la progression de l'algorithme.

Un second aménagement, de préférence combiné au premier, peut consister à conserver des solutions faiblement non dominées sur le critère « minimum-maximum » lors de la procédure d'élimination des chemins partiels. Par exemple, si l'on considère trois critères C1, C2, C3 dont les deux premiers sont additifs et le troisième de type « minimum-maximum », le point z = (3, 2, 4) est dominé par le point z° = (1, 1, 4) pour les critères C1 et C2 mais faiblement non dominé pour le critère C3. z et le chemin partiel correspondant sont donc conservés. Cela permet de considérer tous les chemins efficaces possibles. Cependant, les solutions correspondant aux chemins efficaces finaux (produits à l'étape b) du procédé) sont toutes non dominées et non pas faiblement non dominées.

Tous les chemins possibles déterminés r* sont alors stockés dans une mémoire du dispositif D (non représentée), ce qui garantit que le meilleur d'entre eux, compte tenu des critères et contraintes utilisées, n'a pas été omis.

Le module de traitement M forme ensuite une solution idéale Z( 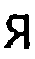 ). Plus précisément, la solution idéale Z( 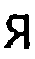 ) est un vecteur se présentant sous la forme d'un multiplet de composantes.

Ces composantes sont calculées comme suit. Pour chaque critère Cp, on extrait la meilleure valeur de performance Z*p observée sur les chemins possibles. Chaque meilleure valeur de performance Z*p observée est appelée valeur optimale associée au critère correspondant. Les différentes valeurs optimales constituent alors les composantes de la solution idéale Z( 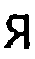 ) = (Z*1, Z*2,..., Z*p), représentative d'un chemin idéal 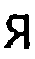 .

ll est important de noter que le chemin idéal 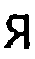 , représenté par la solution idéale Z( 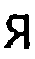 ), ne correspond pas forcément à l'un des chemins possible r* du jeu de chemins possibles déterminés. C'est même rarement le cas, dans la mesure où les liaisons sur lesquelles sont observées les valeurs optimales constituent rarement une séquence connexe. Néanmoins, lorsque c'est le cas, il constitue l'unique chemin possible r* puisqu'il domine tous les autres.

Le module de traitement M soumet ensuite les différents chemins possibles à au moins une contrainte globale choisie.

On entend ici par « contraintes globales » des contraintes pouvant être appliquées à des chemins par opposition aux contraintes locales qui s'appliquent aux liaisons (ou liens) entre noeuds. Il pourra s'agir, par exemple, de la bande passante minimale requise, de la longueur maximale du chemin, du nombre de sauts maximal du chemin, et de la durée maximale du chemin.

Le module de traitement M retient les chemins possibles r* qui ne violent pas la ou les contraintes globales utilisées. Dans le cas d'un routage de type best effort, ce traitement est bien entendu omis.

Le module de traitement M attribue ensuite à chaque chemin possible r* une valeur d'intérêt (ou « path value ») U(r) compte tenu de la solution idéale Z( 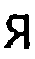 ).

A cet effet, on peut utiliser une fonction de scalarisation classique, comme par exemple une fonction de Tchebychev pondérée, fonction des différences entre les composantes Zp(r) de la valeur de performance Z(r) du chemin concerné r et les composantes correspondantes Zp( 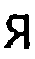 ), représentatives du chemin idéal 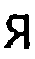 . Une telle fonction peut se présenter sous la forme U(r) = MAX_{p=1 à P} {Wₚ(Zₚ(r) - Zp( 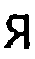 ))}, où Wp est un coefficient de pondération du critère Cp choisi lors de la configuration du dispositif et permettant de donner aux critères, éventuellement, des poids relatifs différents. Cette valeur d'intérêt quantifie l'écart de performance qui sépare un chemin possible r* du chemin idéal 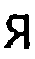 , compte tenu des poids respectifs accordés aux différents critères utilisés.

Le module de traitement M classe ensuite les chemins possibles r* compte tenu de leurs valeurs d'intérêt U(r) respectives. Avec la définition de la valeur d'intérêt U(r) donnée ci-dessus, les chemins possibles sont classés par ordre de valeur d'intérêt croissante, la valeur d'intérêt U(r) la plus petite correspondant au chemin possible r* le mieux approprié au transfert des données, compte tenu des critères et contraintes utilisés. Le classement est donc effectué par rapport à un point idéal inféré par les données et non à partir d'une comparaison fondée sur des valeurs arbitraires.

Puis, il sélectionne parmi les chemins possibles classés les k chemins les mieux classés, de manière à router des données via l'un de ces k chemins, et de préférence celui qui est le mieux classé (valeur d'intérêt U(r) la plus petite dans l'exemple décrit). K est un entier qui peut être compris, par exemple, entre 1 et 5. Il est important de noter que le nombre de chemins trouvés par le traitement décrit ci-avant peut être inférieur à k.

Dans ce qui précède, il a été question de critères et contraintes (locales et globales) qui peuvent sembler, dans certains cas, sensiblement identiques. En fait, ils peuvent être considérés comme des attributs de sélection qui se matérialisent parfois sous la forme de critères, parfois sous la forme de contraintes, sachant qu'un critère fait généralement l'objet d'une maximisation ou d'une minimisation tandis qu'une contrainte est généralement définie par une ou deux valeurs, fixées ou limitatives.

Ces attributs de sélection sont définis par l'opérateur du réseau lors de la configuration du réseau, et dépendent du type de service requis, par exemple l'envoi d'un e-mail ou une demande d'établissement de visio-conférence, et/ou de la qualité de service (ou QoS) requise lors de la réservation initiale de ressources. Plus précisément encore, on choisit les critères en fonction du type de service requis, tandis que l'on choisit les contraintes, et leurs valeurs, en fonction de la qualité de service requise.

L'invention offre également un procédé de détermination de chemin(s) de routage de données dans un réseau de communications comportant une multiplicité de noeuds.

Celui-ci peut être mis en oeuvre à l'aide du dispositif D présenté ci-avant. Les fonctions et sous-fonctions principales et optionnelles assurées par les étapes de ce procédé étant sensiblement identiques à celles assurées par les différents moyens constituant le dispositif D, seules seront résumées ci-après les étapes mettant en oeuvre les fonctions principales du procédé selon l'invention.

Ce procédé se caractérise par la combinaison d'étapes suivante :
a) s'assurer de la connexité d'une partie au moins de la multiplicité de noeuds,
b) parmi les noeuds de cette partie, calculer des chemins possibles r* entre un noeud de départ Ns et un noeud d'arrivée Nt, compte tenu d'au moins deux critères choisis (dont l'un est, de préférence, de type non additif, comme la bande passante), puis déduire une solution idéale Z( 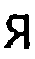 ) des performances Z(r*) des chemins possibles r* sur lesdits critères,
c) attribuer à chaque chemin possible r* une valeur d'intérêt U(r*) compte tenu de la solution idéale Z( 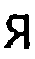 ), puis classer les chemins possibles r* compte tenu de leurs valeurs d'intérêt respectives, et
d) sélectionner parmi les chemins possibles classés les k chemins les mieux classés, de manière à router des données via l'un de ces k chemins.

Afin de permettre un routage de type QoS, on peut, au début de l'étape a), commencer par déterminer parmi la multiplicité de noeuds tous les couples de noeuds qui peuvent établir entre-eux une liaison orientée supportant toutes les contraintes locales choisies, puis s'assurer de la connexité de l'ensemble des noeuds de ces couples. En variante ou en complément, on peut, à la fin de l'étape b), retenir parmi les chemins possibles ceux qui satisfont à toutes les contraintes globales choisies, de sorte qu'à l'étape c) on attribue des valeurs d'intérêt aux chemins possibles retenus.

L'invention ne se limite pas aux modes de réalisation de procédés et dispositifs décrits ci-avant, seulement à titre d'exemple, mais elle englobe toutes les variantes que pourra envisager l'homme de l'art dans le cadre des revendications ci-après.

Ainsi, dans ce qui précède, il a été décrit un mode de fonctionnement de type QoS dans lequel on prenait en compte des critères (au moins deux), au moins une contrainte locale et au moins une contrainte globale. Mais, d'autres modes de fonctionnement peuvent être envisagés. On peut ainsi envisager un mode de fonctionnement de type QoS, simplifié, dans lequel on prend en compte des critères (au moins deux) et au moins une contrainte locale, sans contrainte globale. On peut également envisager un autre mode de fonctionnement de type QoS, simplifié, dans lequel on prend en compte des critères (au moins deux) et au moins une contrainte globale, sans contrainte locale. Enfin, comme évoqué précédemment, on peut également envisager un mode de fonctionnement de type best effort, dans lequel on ne prend en compte que des critères (au moins deux).

## Revendications

1. Procédé de détermination de chemins de routage de données dans un réseau de communications comportant une multiplicité de noeuds (Nn), **caractérisé en ce qu'**il comporte les étapes suivantes :
a) s'assurer de la connexité d'une partie au moins de ladite multiplicité de noeuds (Nn),
b) parmi lesdits noeuds de ladite partie calculer des chemins possibles (r*) entre un noeud de départ (Ns) et un noeud d'arrivée (Nt), compte tenu d'au moins deux critères choisis, puis déduire une solution idéale (Z( 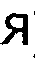 )) à partir de performances (Z(r*)) desdits chemins possibles (r*) sur lesdits critères,
c) attribuer à chaque chemin possible (r*) une valeur d'intérêt (U(r)) compte tenu de ladite solution idéale (Z( 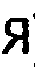 )), puis classer lesdits chemins possibles compte tenu de leurs valeurs d'intérêt respectives, et
d) sélectionner parmi lesdits chemins possibles classés les k chemins les mieux classés, de manière à router des données via l'un desdits k chemins.

2. Procédé selon la revendication 1, **caractérisé en ce qu'**au début de l'étape a) on détermine tout d'abord parmi ladite multiplicité de noeuds (Nn) tous les couples de noeuds pouvant établir entre-eux une liaison orientée supportant chacune d'au moins une contrainte locale choisie, puis on s'assure de la connexité de l'ensemble des noeuds desdits couples.

3. Procédé selon l'une des revendications 1 et 2, **caractérisé en ce qu**'à la fin de l'étape b) on retient parmi lesdits chemins possibles (r*) ceux qui satisfont à chacune d'au moins une contrainte globale choisie, de sorte qu'à l'étape c) on attribue des valeurs d'intérêt (U(r)) auxdits chemins possibles retenus (r*).

4. Procédé selon l'une des revendications 1 à 3, **caractérisé en ce que** l'un au moins desdits critères est de type non additif.

5. Procédé selon la revendication 4, **caractérisé en ce qu**'à l'étape b) on intègre une trace mémorisant un parcours correspondant à un chemin partiel, de manière à détecter et prévenir l'apparition de cycles dans les chemins en cours de construction.

6. Procédé selon la revendication 5, **caractérisé en ce qu'**à l'étape b) on conserve des solutions, dites « faiblement non dominées » sur le critère non additif, lors de la procédure d'élimination desdits chemins partiels.

7. Procédé selon l'une des revendications 1 à 6, **caractérisé en ce que** ladite connexité est vérifiée par un mécanisme de propagation du noeud de départ (Ns) vers tous les autres noeuds (Nn) de ladite multiplicité de noeuds, de sorte que chaque noeud (Nn) soit visité.

8. Procédé selon l'une des revendications 1 à 7, **caractérisé en ce qu**'à l'étape b) on détermine pour chaque chemin des valeurs représentatives de sa « performance » (Z(r)) par rapport à chacun desdits critères choisis, et l'on qualifie de chemin possible (r*) un chemin (r) dont lesdites valeurs de performance (Z(r)) sont dites « non dominées ».

9. Procédé selon la revendication 8, **caractérisé en ce qu'**à l'étape b) on détermine pour chaque critère la meilleure valeur de performance (Z*(r)) observée sur lesdits chemins possibles, dite « valeur optimale », puis on construit ladite solution idéale (Z( 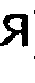 )) sous la forme d'un multiplet de composantes constituées des différentes valeurs optimales déterminées.

10. Procédé selon la revendication 9, **caractérisé en ce qu**'à l'étape c) ladite valeur d'intérêt (U(r)) attribuée à chaque chemin possible (r) caractérise la plus grande valeur des composantes, associées aux différents critères choisis, d'une fonction de Tchebychev pondérée, fonction des différences entre la performance dudit chemin possible (r*) et la valeur optimale correspondante de ladite solution idéale (Z( 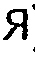 )).

11. Procédé selon la revendication 10, **caractérisé en ce que** lesdits k chemins possibles retenus présentent les k plus petites valeurs d'intérêt (U(r)).

12. Procédé selon l'une des revendications 2 à 11, **caractérisé en ce que** lesdites contraintes locales et/ou globales sont choisies dans un groupe comprenant au moins la bande passante minimale requise, la longueur maximale du chemin, la durée maximale du chemin, au moins une liaison interdite, le nombre de sauts maximal du chemin et une restriction de couleur de chemin.

13. Procédé selon l'une des revendications 1 à 12, **caractérisé en ce que** lesdits critères sont choisis dans un groupe comprenant au moins la bande passante disponible (C2), le nombre de sauts du chemin (C3) et la durée du chemin (C1).

14. Procédé selon la revendication 13, **caractérisé en ce que** lesdits critères choisis utilisés à l'étape b) comprennent la bande passante disponible (C2) et la durée du chemin (C1).

15. Procédé selon la revendication 14, **caractérisé en ce qu**'à l'étape b) on impacte ledit critère portant sur la durée du chemin (C1) par une pénalité.

16. Procédé selon la revendication 15, **caractérisé en ce que** ladite pénalité porte sur le coût d'administration du chemin (CA).

17. Procédé selon l'une des revendications 1 à 16, **caractérisé en ce que** lesdits critères sont choisis en fonction du type de service requis.

18. Procédé selon l'une des revendications 1 à 17, **caractérisé en ce que** lesdits critères choisis sont pondérés en fonction de leur importance compte tenu d'informations de gestion.

19. Procédé selon l'une des revendications 2 à 16, **caractérisé en ce que** lesdites contraintes et leurs valeurs associées sont choisies en fonction de la qualité de service requise.

20. Dispositif de détermination de chemin(s) de routage de données (D) dans un réseau de communications comportant une multiplicité de noeuds (Nn), **caractérisé en ce qu**'il comporte des moyens de traitement (M) agencés pour :
a) s'assurer de la connexité d'une partie au moins de ladite multiplicité de noeuds (Nn),
b) parmi lesdits noeuds de ladite partie calculer des chemins possibles (r*) entre un noeud de départ (Ns) et un noeud d'arrivée (Nt), compte tenu d'au moins deux critères choisis, puis déduire une solution idéale (Z( 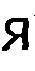 )) à partir de performances (Z(r*)) desdits chemins possibles (r*) sur lesdits critères,
c) attribuer à chaque chemin possible (r*) une valeur d'intérêt (U(r)) compte tenu de ladite solution idéale (Z( 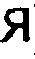 )), puis classer lesdits chemins possibles compte tenu de leurs valeurs d'intérêt respectives, et
d) sélectionner parmi lesdits chemins possibles classés les k chemins les mieux classés, de manière à router des données via l'un desdits k chemins.

21. Dispositif selon la revendication 20, **caractérisé en ce que** lesdits moyens de traitement sont agencés pour commencer par déterminer parmi ladite multiplicité de noeuds (Nn) tous les couples de noeuds pouvant établir entre-eux une liaison orientée supportant chacune d'au moins une contrainte locale choisie, puis pour s'assurer de la connexité de l'ensemble des noeuds desdits couples.

22. Dispositif selon l'une des revendications 20 et 21, **caractérisé en ce** lesdits moyens de traitement sont agencés pour retenir parmi lesdits chemins possibles (r*) ceux qui satisfont à chacune d'au moins une contrainte globale choisie, de manière à attribuer des valeurs d'intérêt (U(r)) auxdits chemins possibles retenus (r*).

23. Dispositif selon l'une des revendications 20 à 22, **caractérisé en ce que** l'un au moins desdits critères est de type non additif.

24. Dispositif selon la revendication 23, **caractérisé en ce que** lesdits moyens de traitement (M) sont agencés pour intégrer au calcul desdits chemins possibles (r*) une trace mémorisant un parcours correspondant à un chemin partiel, de manière à détecter et prévenir l'apparition de cycles dans les chemins en cours de construction.

25. Dispositif selon la revendication 24, **caractérisé en ce que** lesdits moyens de traitement (M) sont agencés pour conserver des solutions, dites « faiblement non dominées » sur le critère non additif, lors de la procédure d'élimination desdits chemins partiels.

26. Dispositif selon l'une des revendications 20 à 25, **caractérisé en ce que** lesdits moyens de traitement (M) sont agencés pour s'assurer de ladite connexité à partir d'un mécanisme de propagation du noeud de départ (Ns) vers tous les autres noeuds (Nn) de ladite multiplicité de noeuds, de sorte que chaque noeud (Nn) soit visité.

27. Dispositif selon l'une des revendications 20 à 26, **caractérisé en ce que** lesdits moyens de traitement (M) sont agencés pour déterminer pour chaque chemin des valeurs représentatives de sa « performance » (Z(r)) par rapport à chacun desdits critères choisis, et pour attribuer la qualité de chemin possible (r*) à un chemin (r) dont lesdites valeurs de performance (Z(r)) sont dites « non dominées ».

28. Dispositif selon la revendication 27, **caractérisé en ce que** lesdits moyens de traitement (M) sont agencés pour déterminer pour chaque critère la meilleure valeur de performance (Z*(r)) observée sur lesdits chemins possibles, dite « valeur optimale », puis pour construire ladite solution idéale (Z( 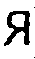 )) sous la forme d'un multiplet de composantes constituées des différentes valeurs optimales déterminées.

29. Dispositif selon la revendication 28, **caractérisé en ce que** lesdits moyens de traitement (M) sont agencés pour attribuer à chaque chemin possible (r*) une valeur d'intérêt (U(r)) caractérisant la plus grande valeur des composantes, associées aux différents critères choisis, d'une fonction de Tchebychev pondérée, fonction des différences entre la valeur de performance dudit chemin possible (r*) et la valeur optimale correspondante de ladite solution idéale (Z( 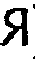 )).

30. Dispositif selon la revendication 29, **caractérisé en ce que** lesdits k chemins possibles (r*) retenus présentent les k plus petites valeurs d'intérêt (U(r)).

31. Dispositif selon l'une des revendications 21 à 30, **caractérisé en ce que** lesdites contraintes locales et/ou globales sont choisies dans un groupe comprenant au moins la bande passante minimale requise, la longueur maximale du chemin, le nombre de sauts du chemin, la durée maximale du chemin, au moins une liaison interdite et une restriction de couleur de chemin.

32. Dispositif selon l'une des revendications 20 à 31, **caractérisé en ce que** lesdits critères sont choisis dans un groupe comprenant au moins la bande passante disponible (C2), le nombre de sauts du chemin (C3) et la durée du chemin (C1).

33. Dispositif selon la revendication 32, **caractérisé en ce que** lesdits critères choisis comprennent la bande passante disponible (C2) et la durée du chemin (C1).

34. Dispositif selon la revendication 33, **caractérisé en ce que** lesdits moyens de traitement (M) sont agencés pour impacter ledit critère portant sur la durée du chemin (C1) par une pénalité.

35. Dispositif selon la revendication 34, **caractérisé en ce que** ladite pénalité porte sur le coût d'administration du chemin (CA).

36. Dispositif selon l'une des revendications 20 à 35, **caractérisé en ce que** lesdits critères sont choisis en fonction du type de service requis.

37. Dispositif selon l'une des revendications 20 à 36, **caractérisé en ce que** lesdits critères choisis sont pondérés en fonction de leur importance compte tenu d'informations de gestion.

38. Dispositif selon l'une des revendications 21 à 37, **caractérisé en ce que** lesdites contraintes et leurs valeurs associées sont choisies en fonction de la qualité de service requise.

39. Utilisation des procédé et dispositif (D) selon l'une des revendications précédentes dans les réseaux de communications IP.

40. Utilisation des procédé et dispositif (D) selon l'une des revendications 1 à 38 avec des protocoles de routage d'état de liaison supportant une gestion de trafic de type TE-LSA, Trafic Engineering - Link State Advertisement.

## Claims

1. A method of determining data routing paths in a communication network including a multiplicity of nodes (Nn), which method is **characterised in that** it includes the following steps:
a) ensuring that at least a portion of said multiplicity of nodes (Nn) are connected,
b) for said nodes of said portion, calculating possible paths (r*) between a departure node (Ns) and an arrival node (Nt), allowing for at least two chosen criteria, and then deducing an ideal solution (Z( 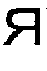 )) from performances (Z(r*)) of said possible paths (r*) based on said criteria,
c) assigning each possible path (r*) a value of interest (U(r)) allowing for said ideal solution (Z( 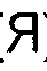 )), and then classifying said possible paths allowing for their respective values of interest, and
d) selecting from said classified possible paths the k best classified paths, in order to route data via one of said k paths.

2. A method according to claim 1, **characterised in that** step a) begins by determining from said multiplicity of nodes (Nn) all the pairs of nodes that can establish between them an oriented link each supporting at least one chosen local constraint, after which it is ensured that all the nodes of said pairs are connected.

3. A method according to claim 1 or 2, **characterised in that** at the end of step b) there are retained from said possible paths (r*) those that each satisfy at least one chosen global constraint so that in step c) values of interest (U(r)) are assigned to said retained possible paths (r*).

4. A method according to any of claims 1 to 3, **characterised in that** at least one of said criteria is of the non-additive type.

5. A method according to claim 4, **characterised in that** step b) integrates a trace storing a route corresponding to a partial path, in order to detect and prevent cycles in the paths under construction.

6. A method according to claim 5, **characterised in that** in step b), during the procedure of eliminating said partial paths, there are retained solutions that are "weakly non-dominated" on the non-additive criterion.

7. A method according to any of claims 1 to 6, **characterised in that** said connectivity is verified by a mechanism of propagation from the departure node (Ns) to all the other nodes (Nn) of said multiplicity of nodes, so that each node (Nn) is visited.

8. A method according to any of claims 1 to 7, **characterised in that** in step b) representative values (Z(r)) of its "performance" are determined for each path with respect to each of said chosen criteria and a path (r) for which said performance values (Z(r)) are "non-dominated" is qualified as a possible path (r*).

9. A method according to claim 8, **characterised in that** in step b) the best performance value (Z*(r)) observed over said possible paths, referred to as the "optimum value", is determined for each criterion and said ideal solution (Z( 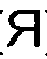 )) is then constructed in the form of a multiplet of components constituted of the various optimum values thus determined.

10. A method according to claim 9, **characterised in that** in step c) said value of interest (U(r)) assigned to each possible path (r) characteriss the greatest value of the components associated with the various chosen criteria of a weighted Tchebychev function of differences between the performance of said possible path (r*) and the corresponding optimum value of said ideal solution (Z( 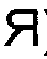 )).

11. A method according to claim 10, **characterised in that** said k possible paths retained have the k lowest values of interest (U(r)).

12. A method according to any of claims 2 to 11, **characterised in that** said local and/or global constraints are selected from a group comprising at least the minimum bandwidth required, the maximum length of the path, the maximum duration of the path, at least one prohibited link, the maximum number of hops on the path, and a path colour restriction.

13. A method according to any of claims 1 to 12, **characterised in that** said criteria are selected from a group comprising at least the available bandwidth (C2), the number of hops on the path (C3), and the duration of the path (C1).

14. A method according to claim 13, **characterised in that** said chosen criteria used in step b) comprise the available bandwidth (C2) and the duration of the path (C1).

15. A method according to claim 14, **characterised in that** in step b) said criterion relating to the duration of the path (C1) is impacted by a penalty.

16. A method according to claim 15, **characterised in that** said penalty applies to the administration cost (CA) of the path.

17. A method according to any of claims 1 to 16, **characterised in that** said criteria are chosen as a function of the type of service required.

18. A method according to any of claims 1 to 17, **characterised in that** said chosen criteria are weighted as a function of their importance in the light of management information.

19. A method according to any of claims 2 to 16, **characterised in that** said constraints and their associated values are chosen as a function of the quality of service required.

20. A device for determining data routing paths (D) in a communication network including a multiplicity of nodes (Nn), which device is **characterised in that** it includes processing means (M) adapted to:
a) ensure that at least a portion of said multiplicity of nodes (Nn) are connected,
b) for said nodes of said portion, calculate possible paths (r*) between a departure node (Ns) and an arrival node (Nt), allowing for at least two chosen criteria, and then deducing an ideal solution (Z( 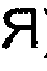 )) from performances (Z(r*)) of said possible paths (r*) based on said criteria,
c) assign each possible path (r*) a value of interest (U(r)) allowing for said ideal solution (Z( 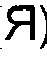 )), and then classifying said possible paths allowing for their respective values of interest, and
d) select from said classified possible paths the k best classified paths, in order to route data via one of said k paths.

21. A device according to claim 20, **characterised in that** said processing means are adapted to begin by determining from said multiplicity of nodes (Nn) all the pairs of nodes that can establish between them an oriented link each supporting at least one chosen local constraint, after which it is ensured that all the nodes of said pairs are connected.

22. A device according to claim 20 or 21, **characterised in that** said processing means are adapted to retain from said possible paths (r*) those that each satisfy at least one chosen global constraint so that values of interest (U(r)) are assigned to said retained possible paths (r*).

23. A device according to any of claims 20 to 22, **characterised in that** at least one of said criteria is of the non-additive type.

24. A device according to claim 23, **characterised in that** said processing means (M) are adapted to integrate into the computation of said possible paths (r*) a trace storing a route corresponding to a partial path, in order to detect and prevent cycles in the paths under construction.

25. A device according to claim 24, **characterised in that** said processing means (M) are adapted to retain solutions that are "weakly non-dominated" on the non-additive criterion during the procedure of eliminating said partial paths.

26. A device according to any of claims 20 to 25, **characterised in that** said processing means (M) are adapted to verify said connectivity by a mechanism of propagation from the departure node (Ns) to all the other nodes (Nn) of said multiplicity of nodes, so that each node (Nn) is visited.

27. A device according to any of claims 20 to 26, **characterised in that** said processing means (M) are adapted to determine representative values (Z(r)) of its "performance" for each path with respect to each of said chosen criteria and to qualify as a possible path (r*) a path (r) for which said performance values (Z(r)) are "non-dominated".

28. A device according to claim 27, **characterised in that** said processing means (M) are adapted to determine the best performance value (Z*(r)) observed over said possible paths, referred to as the "optimum value", for each criterion, and then to construct said ideal solution (Z( 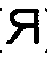 )) in the form of a multiplet of components constituted of the various optimum values thus determined.

29. A device according to claim 28, **characterised in that** said processing means (M) are adapted to assign to each possible path (r*) a value of interest (U(r)) that characteriss the greatest value of the components associated with the various chosen criteria of a weighted Tchebychev function of differences between the performance value of said possible path (r*) and the corresponding optimum value of said ideal solution (Z( 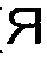 )).

30. A device according to claim 29, **characterised in that** said k possible paths (r*) retained have the k lowest values of interest (U(r)).

31. A device according to any of claims 21 to 30, **characterised in that** said local and/or global constraints are selected from a group comprising at least the minimum bandwidth required, the maximum length of the path, the number of hops on the path, the maximum duration of the path, at least one prohibited link, and a path colour restriction.

32. A device according to any of claims 20 to 31, **characterised in that** said criteria are selected from a group comprising at least the available bandwidth (C2), the number of hops on the path (C3), and the duration of the path (C1).

33. A device according to claim 32, **characterised in that** said chosen criteria comprise the available bandwidth (C2) and the duration of the path (C1).

34. A device according to claim 33, **characterised in that** said processing means (M) are adapted to impact said criterion relating to the duration of the path (C1) by a penalty.

35. A device according to claim 34, **characterised in that** said penalty applies to the administration cost (CA) of the path.

36. A device according to any of claims 20 to 35, **characterised in that** said criteria are chosen as a function of the type of service required.

37. A device according to any of claims 20 to 36, **characterised in that** said chosen criteria are weighted as a function of their importance in the light of management information.

38. A device according to any of claims 21 to 37, **characterised in that** said constraints and their associated values are chosen as a function of the quality of service required.

39. Use of the method and the device (D) according to any one of the preceding claims in IP communication networks.

40. Use of the method and the device (D) according to any one of claims 1 to 38 with link state routing protocols supporting TE-LSA (Traffic Engineering - Link State Advertisement) traffic management.

## Patentansprüche

1. Verfahren zur Bestimmung der Weglenkung von Daten in einem Kommunikationsnetzwerk, das eine Vielzahl von Netzknoten (Nn) enthält, **dadurch gekennzeichnet, dass** es die folgenden Schritte einschließt:
a) sich von der Konnexität zumindest eines Teils dieser Vielzahl von Netzknoten (Nn) vergewissern,
b) aus diesen Netzknoten dieses Teils mögliche Wege (r*) zwischen einem Ausgangsknoten (Ns) und einem Zielknoten (Nt) berechnen, unter Berücksichtigung von mindestens zwei gewählten Kriterien, dann ausgehend von Leistungen (Z(r*)) dieser möglichen Wege (r*) hinsichtlich dieser Kriterien eine ideale Lösung (Z( 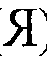 )) herleiten,
c) unter Berücksichtigung dieser idealen Lösung (Z( 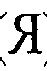 )) jedem möglichen Weg (r*) einen Bedeutungswert (U(r)) zuweisen, dann diese möglichen Wege unter Berücksichtigung ihres jeweiligen Bedeutungswertes klassifizieren, und
d) aus diesen klassifizierten möglichen Wegen die k am besten klassifizierten Wege auswählen, so dass Daten über einen dieser k Wege gelenkt werden.

2. Verfahren gemäß Anspruch 1, **dadurch gekennzeichnet, dass** man zu Beginn des Schritts a) zunächst unter dieser Vielzahl von Netzknoten (Nn) alle Paare von Netzknoten ermittelt, die untereinander eine gerichtete Verbindung aufbauen können und jede der mindestens einen gewählten lokalen Bedingungen unterstützen, dann überzeugt man sich von der Konnexität sämtlicher Knoten dieser Paare.

3. Verfahren gemäß einem der Ansprüche 1 oder 2, **dadurch gekennzeichnet, dass** man am Ende von Schritt b) unter diesen möglichen Wegen (r*) diejenigen festhält, die jeder der mindestens einen gewählten globalen Bedingungen genügen, so dass man bei Schritt c) diesen festgehaltenen möglichen Wegen (r*) Bedeutungswerte (U(r))zuweist.

4. Verfahren gemäß einem der Ansprüche 1 bis 3, **dadurch gekennzeichnet, dass** mindestens eines dieser Kriterien vom nicht additiven Typ ist.

5. Verfahren gemäß Anspruch 4, **dadurch gekennzeichnet, dass** man bei Schritt b) eine Spur integriert, die eine Strecke speichert, die einem Teilweg entspricht, so dass das Auftreten von Zyklen in den im Aufbau befindlichen Wegen erfasst und ihm vorgebeugt wird.

6. Verfahren gemäß Anspruch 5, **dadurch gekennzeichnet, dass** man bei Schritt b) bei dem Verfahren zur Elimination dieser Teilwege so genannte "schwach nicht dominierte" Lösungen hinsichtlich des nicht additiven Kriteriums behält.

7. Verfahren gemäß einem der Ansprüche 1 bis 6, **dadurch gekennzeichnet, dass** diese Konnexität durch einen Ausbreitungsmechanismus vom Ausgangsknoten (Ns) hin zu allen anderen Knoten (Nn) dieser Vielzahl von Knoten überprüft wird, so dass jeder Knoten (Nn) besucht wird.

8. Verfahren gemäß einem der Ansprüche 1 bis 7, **dadurch gekennzeichnet, dass** man bei Schritt b) für jeden Weg Werte ermittelt, die für dessen "Leistung" (Z(r)) bezogen jeweils auf diese gewählten Kriterien stehen, und dass man einen Weg (r), bei dem diese Leistungswerte (Z(r)) als "nicht dominiert" bezeichnet werden, als möglichen Weg (r*) qualifiziert.

9. Verfahren gemäß Anspruch 8, **dadurch gekennzeichnet, dass** man bei Schritt b) für jedes Kriterium den besten Leistungswert (Z*(r)) ermittelt, der auf diesen möglichen Wegen festgestellt wurde, den so genannten "optimalen Wert", man dann diese ideale Lösung (Z( 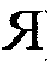 )) in Form eines Multipletts aus Komponenten konstruiert, die aus den verschiedenen ermittelten optimalen Werten gebildet werden.

10. Verfahren gemäß Anspruch 9, **dadurch gekennzeichnet, dass** bei Schritt c) dieser Bedeutungswert (U(r)), der jedem möglichen Weg (r) zugewiesen ist, den größten Wert der Komponenten kennzeichnet, verknüpft mit den verschiedenen gewählten Kriterien einer gewogenen Tchebychev-Funktion, die eine Funktion der Differenzen zwischen der Leistung dieses möglichen Wegs (r*) und dem entsprechenden optimalen Wert dieser idealen Lösung (Z( 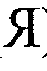 )) ist.

11. Verfahren gemäß Anspruch 10, **dadurch gekennzeichnet, dass** diese festgehaltenen k möglichen Wege die k kleinsten Bedeutungswerte (U(r)) darstellen.

12. Verfahren gemäß einem der Ansprüche 2 bis 11, **dadurch gekennzeichnet, dass** diese lokalen und/oder globalen Bedingungen aus einer Gruppe ausgewählt werden, die den erforderlichen Mindestdurchlassbereich, die maximale Länge des Wegs, die maximale Dauer des Wegs, mindestens eine verbotene Verbindung, die maximale Anzahl der Sprünge des Wegs und eine Farbbeschränkung des Wegs beinhaltet.

13. Verfahren gemäß einem der Ansprüche 1 bis 12, **dadurch gekennzeichnet, dass** diese Kriterien aus einer Gruppe ausgewählt werden, die den verfügbaren Durchlassbereich (C2), die Anzahl der Sprünge des Wegs (C3) und die Dauer des Wegs (C1) einschließt.

14. Verfahren gemäß Anspruch 13, **dadurch gekennzeichnet, dass** diese gewählten Kriterien, die in Schritt b) verwendet werden, den verfügbaren Durchlassbereich (C2) und die Dauer des Wegs (C1) enthalten.

15. Verfahren gemäß Anspruch 14, **dadurch gekennzeichnet, dass** man bei Schritt b) dieses Kriterium, das sich auf die Dauer des Wegs (C1) bezieht, durch eine Strafe beeinflusst.

16. Verfahren gemäß Anspruch 15, **dadurch gekennzeichnet, dass** diese Strafe sich auf die Verwaltungskosten des Wegs (CA) bezieht.

17. Verfahren gemäß einem der Ansprüche 1 bis 16, **dadurch gekennzeichnet, dass** diese Kriterien in Abhängigkeit von der erforderlichen Dienstart gewählt werden.

18. Verfahren gemäß einem der Ansprüche 1 bis 17, **dadurch gekennzeichnet, dass** diese gewählten Kriterien in Abhängigkeit von ihrer Bedeutung unter Berücksichtigung von Verwaltungsinformationen gewichtet werden.

19. Verfahren gemäß einem der Ansprüche 2 bis 16, **dadurch gekennzeichnet, dass** man bei Schritt b) dieses Kriterium, das sich auf die Dauer des Wegs (C1) bezieht, durch eine Strafe beeinflusst.

20. Vorrichtung zur Bestimmung der Weglenkung von Daten (D) in einem Kommunikationsnetzwerk, das eine Vielzahl von Netzknoten (Nn) enthält, **dadurch gekennzeichnet, dass** es Verarbeitungsmittel (M) einschließt, die so aufgebaut sind, dass:
a) sie sich von der Konnexität zumindest eines Teils dieser Vielzahl von Netzknoten (Nn) vergewissern,
b) sie aus diesen Netzknoten dieses Teils mögliche Wege (r*) zwischen einem Ausgangsknoten (Ns) und einem Zielknoten (Nt) berechnen, unter Berücksichtigung von mindestens zwei gewählten Kriterien, dann ausgehend von Leistungen (Z(r*)) dieser möglichen Wege (r*) hinsichtlich dieser Kriterien eine ideale Lösung (Z( 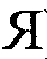 )) herleiten,
c) unter Berücksichtigung dieser idealen Lösung (Z( 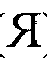 )) jedem möglichen Weg (r*) einen Bedeutungswert (U(r)) zuweisen, dann diese möglichen Wege unter Berücksichtigung ihres jeweiligen Bedeutungswertes klassifizieren, und
d) aus diesen klassifizierten möglichen Wegen die k am besten klassifizierten Wege auswählen, so dass Daten über einen dieser k Wege gelenkt werden.

21. Vorrichtung gemäß Anspruch 20, **dadurch gekennzeichnet, dass** diese Verarbeitungsmittel so aufgebaut sind, dass sie damit beginnen, unter dieser Vielzahl von Netzknoten (Nn) alle Paare von Netzknoten zu ermitteln, die untereinander eine gerichtete Verbindung aufbauen können, die jede der mindestens einen gewählten lokalen Bedingungen unterstützt, und sich dann von der Konnexität sämtlicher Knoten dieser Paare zu überzeugen.

22. Vorrichtung gemäß einem der Ansprüche 20 und 21, **dadurch gekennzeichnet, dass** diese Verarbeitungsmittel so aufgebaut sind, dass sie unter diesen möglichen Wegen (r*) diejenigen festhalten, die jeder der mindestens einen gewählten globalen Bedingungen genügen, so dass diesen festgehaltenen möglichen Wegen (r*) Bedeutungswerte (U(r)) zugewiesen werden.

23. Vorrichtung gemäß einem der Ansprüche 20 bis 22, **dadurch gekennzeichnet, dass** mindestens eines dieser Kriterien vom nicht additiven Typ ist.

24. Vorrichtung gemäß Anspruch 23, **dadurch gekennzeichnet, dass** diese Verarbeitungsmittel (M) so aufgebaut sind, dass sie in die Berechnung dieser möglichen Wege (r*) eine Spur integrieren, die eine Strecke speichert, die einem Teilweg entspricht, so dass das Auftreten von Zyklen in den im Aufbau befindlichen Wegen erfasst und ihm vorgebeugt wird.

25. Vorrichtung gemäß Anspruch 24, **dadurch gekennzeichnet, dass** diese Verarbeitungsmittel (M) so aufgebaut sind, dass sie bei dem Verfahren zur Elimination dieser Teilwege so genannte "schwach nicht dominierte" Lösungen hinsichtlich des nicht additiven Kriteriums behalten.

26. Vorrichtung gemäß einem der Ansprüche 20 bis 25, **dadurch gekennzeichnet, dass** diese Verarbeitungsmittel (M) so aufgebaut sind, dass sie sich von dieser Konnexität überzeugen durch einen Ausbreitungsmechanismus vom Ausgangsknoten (Ns) hin zu allen anderen Knoten (Nn) dieser Vielzahl von Knoten, so dass jeder Knoten (Nn) besucht wird.

27. Vorrichtung gemäß einem der Ansprüche 20 bis 26, **dadurch gekennzeichnet, dass** diese Verarbeitungsmittel (M) so aufgebaut sind, dass sie für jeden Weg Werte ermitteln, die für dessen "Leistung" (Z(r)) bezogen jeweils auf diese gewählten Kriterien stehen, und dass sie einen Weg (r), bei dem diese Leistungswerte (Z(r)) als "nicht dominiert" bezeichnet werden, als möglichen Weg (r*) qualifizieren.

28. Vorrichtung gemäß Anspruch 27, **dadurch gekennzeichnet, dass** diese Verarbeitungsmittel (M) so aufgebaut sind, dass sie für jedes Kriterium den besten Leistungswert (Z*(r)) ermitteln, der auf diesen möglichen Wegen festgestellt wird, den so genannten "optimalen Wert", dann diese ideale Lösung (Z( 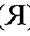 )) in Form eines Multipletts aus Komponenten bilden, die aus den verschiedenen ermittelten optimalen Werten bestehen.

29. Vorrichtung gemäß Anspruch 28, **dadurch gekennzeichnet, dass** diese Verarbeitungsmittel (M) so aufgebaut sind, dass sie jedem möglichen Weg (r*) einen Bedeutungswert (U(r)) zuweisen, der den größten Wert der Komponenten kennzeichnet, verknüpft mit den verschiedenen gewählten Kriterien, einer gewichteten Tchebychev-Funktion, die abhängig ist von den Differenzen zwischen dem Leistungswert dieses möglichen Wegs (r*) und dem entsprechenden optimalen Wert dieser optimalen Lösung (Z( 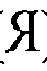 )).

30. Vorrichtung gemäß Anspruch 29, **dadurch gekennzeichnet, dass** diese festgehaltenen k möglichen Wege (r*) die k kleinsten Bedeutungswerte (U(r)) aufweisen.

31. Vorrichtung gemäß einem der Ansprüche 21 bis 30, **dadurch gekennzeichnet, dass** diese lokalen und/oder globalen Bedingungen aus einer Gruppe ausgewählt werden, die mindestens den erforderlichen Mindestdurchlassbereich, die maximale Länge des Wegs, die Anzahl der Sprünge des Wegs, die maximale Dauer des Wegs, mindestens eine verbotene Verbindung und eine Farbbeschränkung des Wegs beinhaltet.

32. Vorrichtung gemäß einem der Ansprüche 20 bis 31, **dadurch gekennzeichnet, dass** diese Kriterien aus einer Gruppe ausgewählt werden, die mindestens den verfügbaren Durchlassbereich (C2), die Anzahl der Sprünge des Wegs (C3) und die Dauer des Wegs (C1) einschließt.

33. Vorrichtung gemäß Anspruch 32, **dadurch gekennzeichnet, dass** diese gewählten Kriterien den verfügbaren Durchlassbereich (C2) und die Dauer des Wegs (C1) enthalten.

34. Vorrichtung gemäß Anspruch 33, **dadurch gekennzeichnet, dass** diese Verarbeitungsmittel (M) so aufgebaut sind, dass sie dieses Kriterium, das sich auf die Dauer des Wegs (C1) bezieht, durch eine Strafe beeinflussen.

35. Vorrichtung gemäß Anspruch 34, **dadurch gekennzeichnet, dass** diese Strafe sich auf die Verwaltungskosten des Wegs (CA) bezieht.

36. Vorrichtung gemäß einem der Ansprüche 20 bis 35, **dadurch gekennzeichnet, dass** diese Kriterien in Abhängigkeit von der erforderlichen Dienstart gewählt werden.

37. Vorrichtung gemäß einem der Ansprüche 20 bis 36, **dadurch gekennzeichnet, dass** diese gewählten Kriterien in Abhängigkeit von ihrer Bedeutung unter Berücksichtigung von Verwaltungsinformationen gewichtet werden.

38. Vorrichtung gemäß einem der Ansprüche 21 bis 37, **dadurch gekennzeichnet, dass** diese Bedingungen und die damit verknüpften Werte in Abhängigkeit von der erforderlichen Dienstqualität gewählt werden.

39. Nutzung des Verfahrens und der Vorrichtung (D) gemäß einem der vorstehenden Ansprüche in IP-Kommunikationsnetzen.

40. Nutzung des Verfahrens und der Vorrichtung (D) gemäß einem der Ansprüche 1 bis 38 mit Verbindungsstatus-Routingprotokollen, die eine Verkehrsverwaltung vom Typ TE-LSA, Trafic Engineering - Link State Advertisement, unterstützen.
